# EUROPÄISCHE PATENTANMELDUNG

(11) **EP 1 187 065 A2**
(43) Veröffentlichungstag der Anmeldung: **13.03.2002**
(21) Anmeldenummer: 00121636.5
(22) Anmeldetag: 04.10.2000
(51) Int. Cl.: G06K 19/077

(54) **Verfahren zur Serienherstellung von Chips, insbesondere für SIM-Karten**

(30) Priorität: 05.09.2000 EP 00119162; 05.09.2000 EP 00119163
(71) Anmelder: ACG Aktiengesellschaft für Chipkarten und Informationssysteme, 65189 Wiesbaden (DE)
(72) Erfinder: Gossel, Sven, 80634 München (DE)
(74) Vertreter: Paul, Dieter-Alfred, Dipl.-Ing.

(57) **Zusammenfassung**

Die Erfindung bezieht sich auf ein Verfahren zur Serienherstellung von Chips, insbesondere für SIM-Karten, das die folgenden Schritte umfaßt:
es wird eine Software erstellt;
die Software wird auf einen Chip aufgebracht;
chipträgerbezogene und benutzerbezogene Personalisierungsdaten werden auf den Chip aufgebracht;
wobei das Verfahren dadurch gekennzeichnet ist, daß zunächst die chipträgerbezogenen Personalisierungsdaten auf die Chips aufgebracht werden und die benutzerbezogenen Personalisierungsdaten getrennt von den chipträgerbezogenen Personalisierungsdaten in einem späteren Produktionsschritt auf den Chip aufgebracht werden.

## Beschreibung

Die vorliegende Erfindung betrifft ein Verfahren zur Serienherstellung von Chips, insbesondere für SIM-Karten, das die folgenden Schritte umfaßt:
es wird eine Software erstellt;
die Software wird auf einen Chip aufgebracht;
chipträgerbezogene und benutzerbezogene Personalisierungsdaten werden auf den Chip aufgebracht.

Die Erfindung befaßt sich mit der Herstellung aller Arten von Chips und in erster Linie mit der Herstellung von sogenannten SIM-Karten (Subscriber Identity Module), d.h. Mobilfunkkarten, die ins Mobiltelefon eingesteckt und durch eine Eingabe einer PIN aktiviert werden müssen, um mit dem Mobiltelefon selbst telefonieren oder Anrufe entgegennehmen zu können. In einem Chip auf der SIM-Karte sind die Informationen gespeichert, die das Mobiltelefon braucht, um sich nach dem Einschalten an einem Mobilfunknetz anzumelden. Die Daten, die hierzu auf dem Chip gespeichert sein müssen, werden Personalisierungsdaten genannt, wobei man zwischen chipträgerbezogenen Personalisierungsdaten, die für alle Chipträger eines Typs, für welche die Chips bestimmt sind wie beispielsweie Armbanduhren, Karten etc. identisch sind, und benutzerbezogenen Personalisierungsdaten, welche die Karte individualisieren wie beispielsweise die Seriennummer, die PIN-Nummer etc. voneinander unterscheidet.

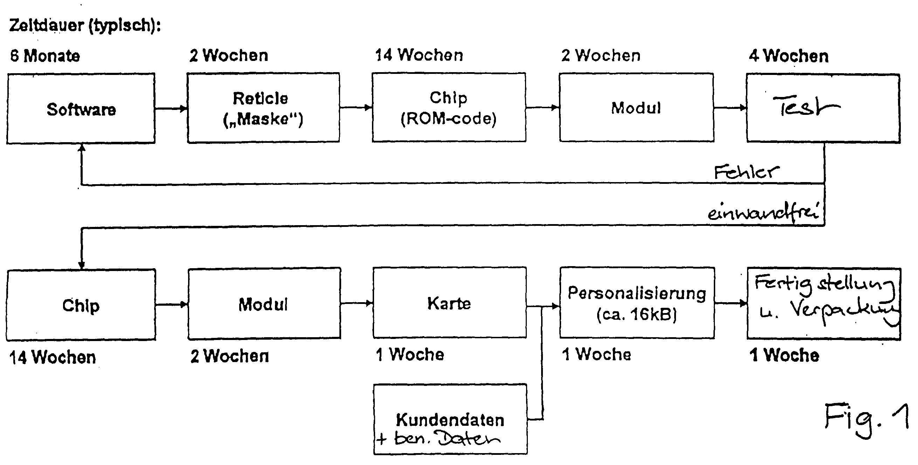

Die Herstellung von SIM-Karten erfolgt heute üblicherweise in der in Figur 1 schematisch dargestellten und nachfolgend beschriebenen Weise:

An erster Stelle erfolgt die Softwareentwicklung, die einen Zeitraum von etwa 6 Monaten in Anspruch nimmt. Basierend auf dieser Software wird eine Maske erstellt, auf deren Grundlage wiederum ein ROM-Chip hergestellt wird. Hierfür werden etwa 16 Wochen benötigt. Der Chip wird anschließend in ein Modul eingebettet und getestet (ca. 6 Wochen). Beim Auftreten von Fehlern wird die Software modifiziert und der Prozeß der Maskenherstellung, Chipherstellung, Modulproduktion, Überprüfung und Modifizierung wird wiederholt, bis die Testergebnisse einwandfrei sind. Erst dann beginnt die Serienproduktion, wobei zunächst die ROM-Chips hergestellt und in ein Modul eingebettet werden, was etwa 16 Wochen in Anspruch nimmt. Anschließend werden Kunststoffkarten hergestellt und gegebenenfalls bedruckt und die Chipmodule in die Karten eingebettet. Anschließend werden auf die Chips die Personalisierungsdaten aufgebracht.

Der zuvor beschriebene Prozeß ist sehr aufwendig und führt einerseits zu erheblichen Lieferzeiten und zum anderen zu erheblichen Produktionskosten.

Aufgabe der Erfindung ist es daher, ein Verfahren zur Serienherstellung von Chips der eingangs genannten Art in der Weise weiterzubilden, daß die Produktionszeiten sowie Produktionskosten herabgesetzt werden können.

Diese Aufgabe ist erfindungsgemäß dadurch gelöst, daß zunächst die chipträgerbezogenen Personalisierungsdaten auf die Chips aufgebracht werden und erst in einem späteren Produktionsschritt die benutzerbezogenen Personalisierungsdaten getrennt von den chipträgerbezogenen Personalisierungsdaten auf die Chips aufgebracht werden. Der Erfindung liegt damit der Gedanke zugrunde, die Personalisierung der Chips nicht wie im Stand der Technik in einem Produktionsschritt vorzunehmen, sondern zunächst im Rahmen einer Vorpersonalisierung die kundenspezifischen, d.h. chipträgerbezogenen Personalisierungsdaten auf die Chips aufzubringen und später eine Nachpersonalisierung vorzunehmen, in deren Rahmen dann die benutzerbezogenen Personalisierungsdaten wie beispielsweise die Schlüssel- und die ID-Nummern auf die Karten aufgebracht werden. Diese Trennung von Vor- und Nachpersonalisierung bringt eine erhebliche Senkung der Produktionskosten mit sich. Dies liegt daran, daß es sich bei den benutzerbezogenen Personalisierungsdaten um sicherheitsrelevante Daten handelt, die nur in entsprechenden Sicherheitsumgebungen auf die Chips aufgebracht werden dürfen. Während im Stand der Technik die gesamten Personalisierungsdaten gleichzeitig in einer Sicherheitsumgebung auf die Chips aufgebracht werden, wozu etwa eine Programmierzeit von einer Minute erforderlich ist, brauchen die Chips durch die erfindungsgemäß vorgenommene Aufgliederung der Personalisierungsdaten nur diejenige Zeit in einer Sicherheitsumgebung zu verbringen, die benötigt wird, um die benutzerbezogenen Personalisierungsdaten auf die Chips aufzubringen. Diese beträgt jedoch nur wenige Sekunden, so daß die Investitionen für die Sicherheitsumgebungen und Kontrollmaßnahmen gering sind.

Gemäß einer bevorzugten Ausführungsform ist vorgesehen, daß die chipträgerbezogenen Personalisierungsdaten in einem Produktionsschritt mit einer Chipmodulherstellung auf die Chips aufgebracht werden. Dieser Ausgestaltung liegt die Überlegung zugrunde, daß die Chipmodule unmittelbar nach ihrer Herstellung von einem Testgerät auf ihre Funktionsfähigkeit getestet werden müssen, was üblicherweise etwa 4 bis 5 Sekunden in Anspruch nimmt. Genau diese Zeit wird nun genutzt, um die Vorpersonalisierung vorzunehmen. Dabei kann durch eine entsprechende Anzahl von Programmierköpfen sichergestellt werden, daß durch die Vorpersonalisierung, die etwa 20 bis 80 Sekunden in Anspruch nimmt, die Modulherstellung und -überprüfung nicht verlangsamt werden. Hierdurch kann die Zeit für eine Personalisierung in einem separaten Produktionsschritt erheblich herabgesenkt werden. Dies trägt ebenfalls zur Senkung der Produktionskosten bei.

Die Aufbringung der Vorpersonalisierungsdaten kann im Rahmen der Modulherstellung durch eine separate Vorrichtung vorgenommen werden, die über eine entsprechende Anzahl von mehr als 16 Programmierköpfen verfügt. In gleicher Weise kann auch das Testgerät zur Überprüfung der Chips mit einer solchen Anzahl von Programmierköpfen ausgestattet sein.

Alternativ ist es möglich, die Vorpersonalisierungsdaten bereits in einem früheren Produktionssschritt vorzunehmen, beispielsweise bei der Herstellung der Wafer, aus denen letztendlich die Chips entstehen, oder der Chips. Auch die Wafer werden in der Regel einem Funktionstest unterzogen, so daß die hier erforderliche Testzeit auch für eine Vorpersonalisierung zur Verfügung stünde, ohne den Prozeß zu verlangsamen. Für die Vorpersonalisierung kann ebenfalls eine separate Vorrichtung vorgesehen oder das Testgerät für die Wafer mit einer entsprechenden Anzahl von wenigstens 16 Programmierköpfen ausgestattet sein.

Letztendlich spielt es aber keine Rolle, ob die Personalisierung in einem separaten Produktionsschritt vorgenommen wird oder in einen bestehenden Produktionsschritt eingegliedert ist. Wesentlich ist, daß die Vorpersonalisierung getrennt von der Nachpersonalisierung erfolgt, wobei die Vorpersonalisierung durchaus auch in mehreren Stufen oder Ebenen erfolgen kann.

Die Nachpersonalisierung kann ebenfalls durch eine separate Programmiervorrichtung mit wenigstens einem entsprechenden Prammierkopf vorgenommen werden. Gemäß einer bevorzugten Ausführungsform ist allerdings vorgesehen, daß die benutzerbezogenen Personalisierungsdaten im Produktionsschritt der automatischen Einbettung der Chipmodule in einen Träger wie beispielsweise eine Karte die Karten auf den Chip aufgebracht werden. Durch diese In-Line-Aufbringung der benutzerbezogenen Personalisierungsdaten während des Einbettungsprozesses der Module können die Produktionszeiten weiter herabgesetzt werden, da diese Daten nicht mehr in einem separaten Produktionsschritt eingebracht zu werden brauchen.

Gemäß einem weiteren Aspekt der vorliegenden Erfindung werden Flashcontroller anstelle der bisher verwendeten ROMs für die Chips eingesetzt. Hierdurch können Entwicklungslose wie im Stand der Technik vermieden und die langwierigen Chipproduktionen umgangen werden. Mit einer entsprechenden Softwareplattform, die die Portierung von Software auf andere Halbleiter verkürzt (Hardware Abs=20traction Layer), kann diese Software dann in Verbindung mit den Flashcontrollern sofort eingesetzt werden. Langwierige Entwicklungs- und Testzeiten entfallen daher bzw. können erheblich verkürzt werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: ein Ablaufdiagramm, das die Entwicklung und Herstellung von Chipkarten gemäß dem Stand der Technik darstellt und
- Figur 2: ein Flußdiagramm, das das Verfahren zur Serienherstellung von Chipkarten gemäß der vorliegenden Erfindung darstellt.

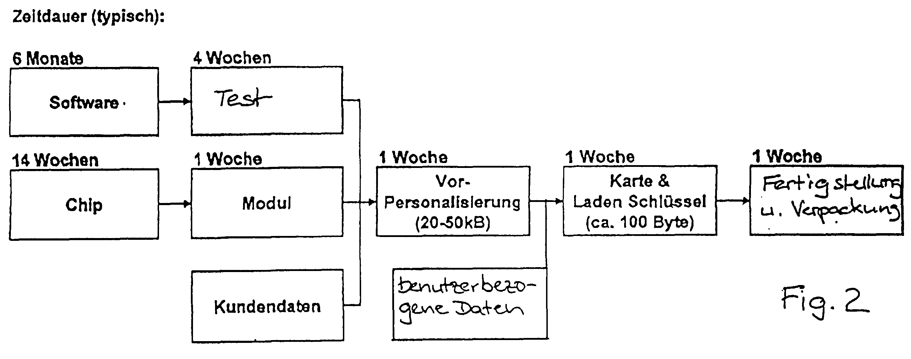

Nach dem in Figur 2 dargestellten Verfahren zur Serienherstellung von Chipkarten gemäß der vorliegenden Erfindung erfolgt zunächst die Entwicklung einer entsprechenden Software, die wie im Stand der Technik etwa 6 Monate in Anspruch nimmt. Diese Software ist so gestaltet, daß sie die Portierung auf andere Halbleiter auf ein Zeitminimum und Kostenminimum verkürzt (Hardware Abstraction Layer) und in Verbindung mit Flashcontrollern einsatzfähig ist. Parallel zu dieser Softwareentwicklung werden die Flashcontroller-Chips hergestellt. Die Chips werden dann in üblicher Weise durch entsprechende Maschinen in Module eingebettet und im Anschluß daran mit der entwikkelten Software programmiert. Die so programmierten Chipmodule werden durch beispielsweise Transportbänder zu einem Testgerät transportiert und dort auf ihre Funktionsfähigkeit getestet. Dieser Testmodus ist an sich bekannt und soll deshalb an dieser Stelle nicht weiter beschrieben werden. Interessant ist lediglich, daß für jeden Chip eine Testzeit von 20 bis 80 Sekunden erforderlich ist, weshalb gleichzeitig jeweils mehrere Chips getestet werden, um den Prozeß der Modulherstellung und der Programmierung nicht zu verlangsamen.

Im Anschluß an die Überprüfung der Funktionsfähigkeit werden auf die funktionstüchtigen Chipmodule die Vorpersonalisierungsdaten, d.h. die kartenbezogenen Personalisierungsdaten, aufgebracht, wozu das Testgerät mit insgesamt mehr als 16 Programmierköpfen ausgestattet ist, zu denen die Chipmodule automatisch transportiert werden. Da die Vorpersonalisierung mehr Zeit in Anspruch nimmt als der vorher durchgeführte Funktionstest, erfolgt eine Parallelprogrammierung mehrerer Chips, wozu entsprechend viele Programmierköpfe vorgesehen sind.

Die so fertiggestellten und mit den Vorpersonalisierungsdaten programmierten Chipmodule werden anschließend in üblicher Weise in Kunststoffkarten eingebettet. Hierzu werden in bevorzugter Weise vorgefertigte Kunststoffrohlinge mit einer entsprechenden Kavität und Plug-in-Form verwendet. Der Einbettung vorgeschaltet oder nachgeschaltet, jedoch in dem gleichen Produktionsschritt, erfolgt die Aufbringung der benutzerbezogenen Personalisierungsdaten auf die Chips durch eine entsprechende Programmiervorrichtung. Dieser Personalisierungsschritt, welcher der einzige sicherheitsrelevante Schritt in der Produktion darstellt, da nur hier die Schlüssel und ID-Nummern eingetragen werden, wird in einer Sicherungsumgebung durchgeführt. Da für diesen Teil der Personalisierung nur wenige Sekunden erforderlich sind, können die Investitionen für Sicherheitsumgebungen gering gehalten werden.

Es hat sich gezeigt, daß durch die Anwendung des erfindungsgemäßen Verfahrens, d.h. den Einsatz von Flashcontrollern anstelle von ROMs, die Vorpersonalisierung im Rahmen der Modulherstellung und die Aufbringung der benutzerbezogenen Personalisierungsdaten während der Moduleinbettung in die Karten die Produktionszeiten und -kosten erheblich gesenkt werden können.

## Patentansprüche

1. Verfahren zur Serienherstellung von Chips, insbesondere für SIM-Karten, das die folgenden Schritte umfaßt:
es wird eine Software erstellt;
die Software wird auf einen Chip aufgebracht;
chipträgerbezogene und benutzerbezogene Personalisierungsdaten werden auf den Chip aufgebracht;
wobei das Verfahren **dadurch gekennzeichnet ist, daß**
zunächst die chipträgerbezogenen Personalisierungsdaten auf die Chips aufgebracht werden und erst in einem späteren Produktionsschritt die benutzerbezogenen Personalisierungsdaten getrennt von den chipträgerbezogenen Personalisierungsdaten auf die Chips aufgebracht werden.

2. Verfahren nach Anspruch 1, **dadurch gekennzeichnet, daß** die chipträgerbezogenen Personalisierungsdaten in mehreren Schritten auf die Chips aufgebracht werden.

3. Verfahren nach Anspruch 1 oder 2, **dadurch gekennzeichnet, daß** die chipträgerbezogenen Personalisierungsdaten einem Produktionsschritt mit einer Chipmodulherstellung auf die Chips aufgebracht werden.

4. Verfahren nach Anspruch 3, **dadurch gekennzeichnet, daß** die Chipmodule von einem Testgerät auf ihre Funktionsfähigkeit getestet werden und die systembezogenen Personalisierungsdaten im Rahmen dieses Testbetriebs auf die Chips aufgebracht werden.

5. Verfahren nach Anspruch 1, **dadurch gekennzeichnet, daß** die Aufbringung der Software in einem Produktionsschritt mit der Chipmodulproduktion erfolgt.

6. Verfahren nach Anspruch 1, **dadurch gekennzeichnet, daß** die chipträgerbezogenen Personalisierungsdaten auf Wafer aufgebracht werden, aus denen die Chips hergestellt werden.

7. Verfahren nach Anspruch 6, **dadurch gekennzeichnet, daß** die Wafer auf ihre Funktionsfähigkeit getestet werden und die chipträgerbezogenen Personalisierungsdaten während dieses Tests auf die Wafer aufgebracht werden.

8. Verfahren nach einem der vorherigen Ansprüche, **dadurch gekennzeichnet, daß** Flashcontroller für die Chips eingesetzt werden.

9. Verfahren nach einem der vorherigen Ansprüche, **dadurch gekennzeichnet, daß** die Chipmodule jeweils in einen Träger, insbesondere in eine Karte, eingebettet werden und die benutzerbezogenen Personalisierungsdaten im Produktionsschritt der automatischen Einbettung der Chipmodule in die Träger auf den Chip aufgebracht werden.

10. Verfahren nach Anspruch 9, **dadurch gekennzeichnet, daß** vorgefertigte Karten mit einer Kavität für die einzubettenden Chipmodule als Träger verwendet werden.

11. Verfahren nach Anspruch 10, **dadurch gekennzeichnet, daß** vorgefertigte Karten mit einer Kavität und Plug-in-Form für die einzubettenden Chips verwendet werden.

12. Vorrichtung zum Testen von Wafern, **dadurch gekennzeichnet, daß** sie mehr als 16 Programmierköpfe aufweist, um chiptägerbezogene Personalisierungsdaten auf die Chips aufzubringen.

13. Vorrichtung zum Testen von Chips oder gesägten Wafern auf ihre Funktionsfähigkeit, **dadurch gekennzeichnet, daß** sie mehr als 16 und insbesondere 32 Programmierköpfe aufweist, um chipträgerbezogene Personalisierungsdaten auf die Chips aufzubringen.

14. Vorrichtung zur Herstellung von Chipmodulen, **dadurch gekennzeichnet, daß** sie mehr als 16 Programmierköpfe aufweist, um chipträgerbezogene Personalisierungsdaten auf die Chips aufzubringen.

15. Vorrichtung zum Testen von Chipmodulen, **dadurch gekennzeichnet, daß** sie mehr als 16 Programmierköpfe aufweist, um chipträgerbezogene Personalisierungsdaten auf die Chips aufzubringen.

16. Vorrichtung zum Einbetten von Chipmodulen in einen insbesondere kartenförmigen Träger, **dadurch gekennzeichnet, daß** sie wenigstens einen Programmierkopf aufweist, um benutzerbezogene Personalisierungsdaten auf die Chips der Chipmodule aufzubringen.

17. Vorrichtung zur Personalisierung von in einen Träger eingebetteten Chips, **dadurch gekennzeichnet, daß** sie wenigstens einen Porgrammierkopf zur Aufbringung von benutzerbezogenen Personalisierungsdaten aufweist.
